# FASCICULE DE BREVET EUROPEEN

(11) **EP 0 641 157 B1**
(45) Date de publication et mention de la délivrance du brevet: **04.09.1996**
(21) Numéro de dépôt: 93913070.4
(22) Date de dépôt: 25.05.1993
(51) Int. Cl.: A01G 23/093, A01D 49/00, A01G 3/00

(54) **MACHINE POUR LA DESTRUCTION DES DECHETS DE BANANERAIE**
MASCHINE ZUR ABFALLVERNICHTUNG AUF BANANENPLANTAGEN
MACHINE FOR THE DESTRUCTION OF BANANA PLANTATION DEBRIS

(30) Priorité: 26.05.1992 FR 9206662; 15.02.1993 FR 9302014
(43) Date de publication de la demande: 08.03.1995
(73) Titulaire: SOCIETE DE CONSTRUCTION METALLIQUE ET DE COMMERCE, F-97122 Baie-Mahault (FR)
(72) Inventeur: LE MAIGAT, René, F-97190 Gosier (FR)
(74) Mandataire: Perrier, Jean-Pierre
(86) Numéro de dépôt international: FR9300510
(87) Numéro de publication internationale: WO9323988

(56) Documents cités:
- EP-A- 0 308 303
- US-A- 3 246 458
- US-A- 3 925 969
- US-A- 4 690 224

## Description

Après plantation, dans un sol favorable et préparé, les nombreux yeux émis du bulbe ou souche souterraine du bananier évoluent pour former des rejets constitués par de longues feuilles. Sur les rejets sélectionnés, l'imbrication des feuilles forme un pseudo-tronc dont la taille varie de 1,5 à 8 mètres, selon les espèces de bananiers et selon les conditions de culture.

Après floraison, les bractées tombent successivement en laissant apparaître les fruits ou doigts, alors orientés vers le bas. Dans les mois qui suivent, ces doigts se redressent et se courbent, s'allongent et grossissent en formant des mains reliées à la hampe du régime de bananes.

Après récolte du régime, le pseudo-tronc est sectionné, car il ne peut donner qu'une inflorescence.

Cette opération marque la fin d'un cycle de production et engage le cycle suivant.

Durant la dernière phase du cycle de production, plusieurs jeunes rejets sont sélectionnés sur chaque souche, par sectionnement. Ils assurent la pérennité de la culture.

En cultures mécanisables, pour des raisons économiques liées à divers facteurs, il faut, après une période variable, détruire la bananeraie pour établir une jachère ou pour replanter. Les meilleurs plans sont alors sélectionnés et sortis de la parcelle pour être replantés après préparation du sol.

Actuellement, cette préparation du sol consiste à hacher les pseudo-troncs et les autres déchets végétaux et à les enfouir dans le sol au moyen de pulvérisateurs lourds à disques qui doivent effectuer quatre ou cinq passages croisés sur le terrain pour parvenir à des résultats moyens, puisque les pseudo-troncs se hachent difficilement et, par leur enfouissement dans le sol, se dégradent difficilement.

Le recours à de tels engins entraîne une compaction du sol qui est d'autant plus importante que, en raison des conditions climatiques et notamment des fortes précipitations, le sol est souvent très chargé en humidité.

Par ailleurs, la teneur en eau des déchets, très importante puisque de l'ordre de 90 %, associée à la quantité de déchets enfouis, de l'ordre de 2 00 tonnes à l'hectare, engendrent des dégorgements d'eau importants qui, s'ajoutant à l'humidité naturelle du sol, perturbent l'opération ultérieure de sous-solage rendue nécessaire par le compactage provoqué par les pulvérisateurs.

En effet, cette opération de sous-solage, réalisée par des outils de décompaction, en plusieurs passages croisés, permet rarement d'obtenir la dislocation par fissuration souhaitée des zones compactes, dislocation entraînant l'ameublissement du sol, car la pénétration des dents des outils dans un sol trop humide, s'effectue sans provoquer une quelconque fissuration.

Il ressort de ce qui précède que les techniques actuelles de préparation du sol ne donnent pas satisfaction au niveau de la qualité de hachage des déchets et au niveau de leur destruction ultérieure, tout en mettant en oeuvre des moyens qui, altérant la structure du sol, nécessitent des moyens complémentaires ayant une efficacité incertaine.

La présente invention a pour but de remédier à cela en fournissant une machine autotractée pour la destruction des déchets de bananeraie, machine qui, non seulement, maintient la structure du sol, mais aussi améliore la dégradation de la matière végétale, tout en réduisant le nombre de passage et en accélérant le temps de préparation.

Cette machine est du type comprenant un châssis automoteur sur roues, dont au moins deux sont motrices et dont au moins l'une est directrice.

Selon l'invention, elle comporte, d'avant en arrière par rapport au sens de travail, un bouclier d'inclinaison des pseudo-troncs non sectionnés, un châssis tunnel qui, ayant en section transversale la forme d'un "U" retourné, est relié au châssis automoteur par des moyens de réglage de son niveau et de l'inclinaison sur l'horizontale du plan de coupe du broyeur à inertie qu'il supporte, et porte, d'une part et en partie supérieure, un moyen d'entraînement en rotation d'un arbre sensiblement vertical à l'extrémité inférieure duquel est calé un volant d'inertie, et, d'autre part et en partie médiane, un palier fixe pour un arbre intermédiaire, coaxial au premier et dont l'extrémité supérieure est liée en rotation au volant d'inertie, alors que, sur son extrémité inférieure, est calé un plateau circulaire porteur d'au moins deux lames de coupe montées libres en rotation sur des pivots.

Lorsque la machine est en fonctionnement, son seul déplacement à cheval sur une rangée de pseudo-troncs assure, par son bouclier, le couchage des pseudo-troncs non sectionnés, puis, par le broyeur, dont le plan de coupe est incliné, d'abord l'attaque de chaque pseudo-tronc par la partie antérieure du plan de coupe, puis le déchiquetage et le hachage des pseudo-troncs et de tous les déchets reposant sur le sol, par la partie postérieure de ce plan de coupe.

Cette opération s'effectue en un seul passage et, grâce au faible poids de la machine autotractée, par comparaison avec les pulvérisateurs lourds, n'assure aucun compactage de ce sol.

Grâce au volant d'inertie, qui compense les variations du couple résistant à chaque attaque d'un pseudo-tronc, les moyens d'entraînement du broyeur travaillent à régime sensiblement constant, et peuvent avoir une puissance correspondant à celle des tracteurs couramment utilisés, c'est à dire comprise entre 80 et 120 chevaux.

A cet avantage, permettant d'utiliser les tracteurs traditionnels en remplacement des pulvérisateurs lourds ayant un coût horaire plus élevé, s'ajoute la réduction du compactage du sol, par gain de poids et par suppression de nombreux passages, et, en conséquence, la protection de la structure du sol.

Par ailleurs, après passage du broyeur à inertie, détruisant aussi les souches sur la profondeur d'engagement des lames dans le sol, il se forme un mulch, c'est à dire une couche de surface de déchets finement broyés. Après enfouissement des déchets, et grâce à la présence d'air entre eux, ceux-ci se dégradent dans des conditions aérobies, donc plus vite, tout en favorisant l'humidification du sol et un meilleur transfert à celui-ci des complexes colloïdaux humiques.

Grâce à la qualité du broyage obtenu, la préparation du sol pour le cycle de récolte suivant ne nécessite qu'un travail superficiel au moyen d'une charrue sillonneuse n'affectant pas le sous sol.

D'autres caractéristiques et avantages ressortiront de la description qui suit en référence aux dessins schématiques annexés, représentant deux formes d'exécution de cette machine.
Figure 1 est une vue de côté en élévation montrant une première forme d'exécution de la machine en position de travail sur une rangée de bananiers, mais avec le châssis tunnel posé,
Figure 2 est une vue partielle, en coupe partielle, à échelle agrandie, montrant plus en détails une forme d'exécution du broyeur disposé à l'arrière du châssis automoteur, lorsqu'il est en position de travail,
Figure 3 est une vue en coupe suivant III-III de figure 2 montrant, à échelle encore plus agrandie, les composants du broyeur monté dans le châssis tunnel,
Figure 4 est une vue en plan par dessus montrant, à échelle agrandie, une forme d'exécution d'une lame du broyeur,
Figure 5 est une vue partielle en coupe montrant, à échelle encore plus agrandie, les moyens d'entraînement en rotation des lames.
Figure 6 est une vue de coté, similaire à la figure 2, mais montrant en élévation une variante de réalisation du châssis tunnel,
Figure 7 est une vue de côté d'une deuxième forme d'exécution de la machine,
Figure 8 est une vue de face de la machine de la figure 7.

La machine, selon l'invention, est essentiellement composée d'un châssis automoteur, désigné de façon générale par la référence A et constitué, dans cette forme d'exécution, par un tracteur agricole, d'un bouclier, désigné par la référence B, et d'un ensemble de broyage arrière C ou broyeur à inertie.

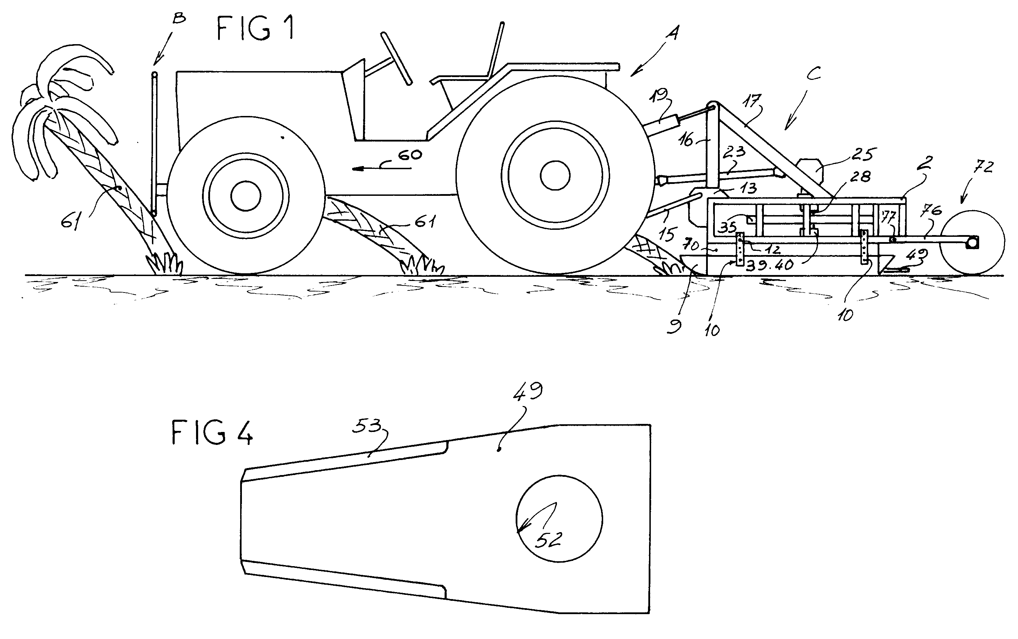

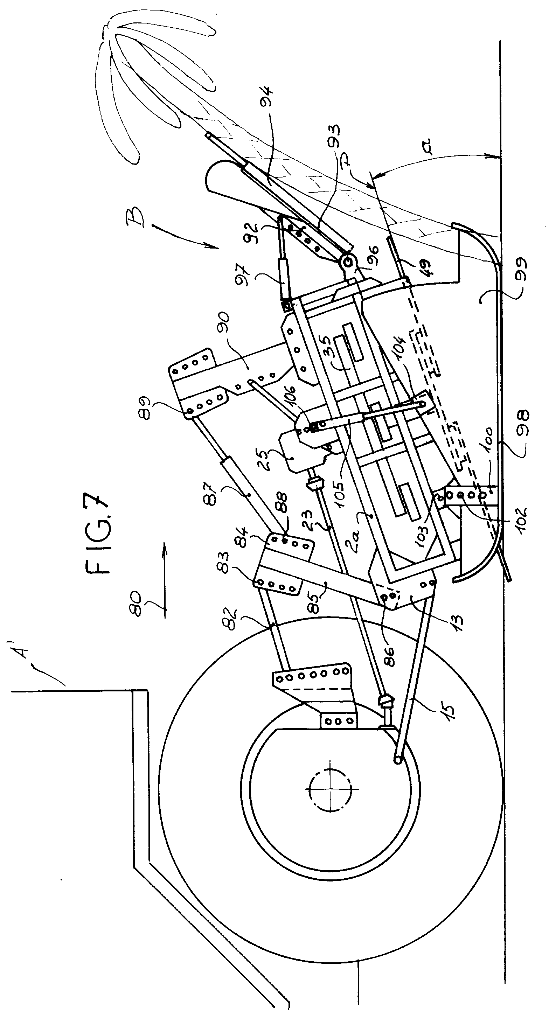

Dans la forme d'exécution des figures 1 à 6, la machine travaille dans le sens d'avancement normal du tracteur, tandis que dans les formes d'exécution des figures 7 et 8, son sens de travail correspond au déplacement en marche arrière du tracteur.

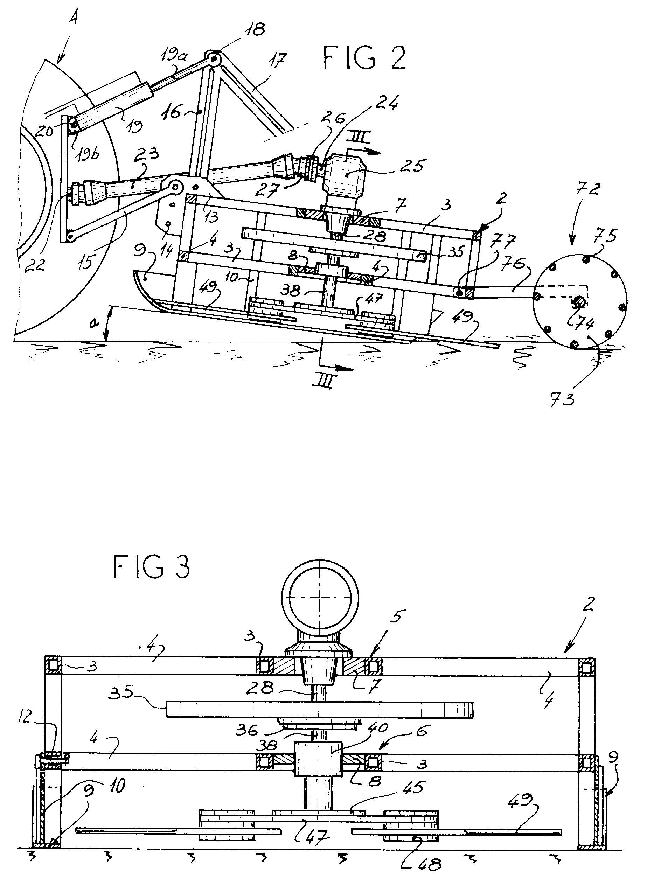

Comme le montrent plus en détails les figures 2 et 3, l'ensemble de broyage est lui-même composé d'un châssis tunnel 2 ayant en section transversale la forme générale d'un "U" retourné. Les longerons 3 et traverses 4 de ce châssis délimitent, dans sa partie centrale, des cadres supports, respectivement supérieur 5 et médian 6, pour des platines de fixation, respectivement, supérieure 7 et médiane 8, soudées sur ces cadres. Le châssis repose sur le sol par l'intermédiaire de deux patins longitudinaux 9 qui sont, chacun, fixés au coté correspondant du châssis par des montants 10. C cette fixation est assurée par des moyens permettant de régler la position des patins par rapport aux cotés et, par exemple, par des broches transversales 12 s'engageant dans des alésages des longerons 3 et coopérant avec l'une des perforations ménagées dans chacun des montants 10.

Sur sa partie antérieure et supérieure, le châssis tunnel 2 est solidaire de deux goussets 13 comportant des perforations transversales 14 permettant leur fixation aux extrémités libres des deux bielles 15, latérales et inférieures, de l'attelage 1 du tracteur A.

Le châssis turnel 2 comporte également deux montants verticaux 16 qui, renforcés chacun par des entretoises postérieures 17, sont disposés de part et d'autre de son plan médian vertical longitudinal et comportent, en partie supérieure, un alésage pour la fixation d'une broche 18 servant à l'attelage de la tige 19a d'un vérin 19 à double effet, dont le corps 19b est attelé en 20 au troisième point de l'attelage arrière du tracteur.

On conçoit aisément qu'en alimentant la chambre côté tige ou la chambre côté piston du vérin 19a-19b, il soit possible de modifier aisément l'inclinaison du châssis 2 et, en conséquence, celle de l'angle de coupe a du broyeur par rapport au sol, et qu'il soit également possible de soulever l'ensemble du châssis tunnel, par exemple pour remédier à un bourrage.

Dans cette forme d'exécution et comme le montre plus en détails la figure 2, la prise de force arrière 22 du tracteur A est reliée, par un arbre télescopique 23 à double joint de cardan, à l'arbre d'entrée 24 d'un renvoi d'angle 25 fixé sur le châssis 2. Il s'agit d'un renvoi d'angle multiplicateur, apte à communiquer à son arbre de sortie une vitesse de l'ordre de 800 tours par minute, pour un régime constant de la prise de force 22 à sensiblement 540 tours par minute.

Avantageusement, entre l'arbre télescopique 23 et l'arbre d'entrée 24 précité, sont interposés, d'une part, un limiteur de couple 26 et, d'autre part, un mécanisme à cliquet 27 ne permettant la transmission du mouvement que dans le sens arbre télescopique 26 - arbre d'entrée 24, et s'opposant donc à l'entraînement de l'arbre 23 par l'arbre 24.

Comme le montre plus en détails la figure 5, le boîtier du renvoi d'angle 25 est fixé par sa semelle 25a sur la bride supérieure 7 du châssis 2. L'arbre de sortie 28 du renvoi d'angle est sensiblement vertical. Sur cet arbre de sortie 28 est calé, en rotation par une clavette 29 et en translation par un écrou à créneau 30, un moyeu 32 solidaire d'une couronne 33. Cette couronne sert à la fixation, par des boulons 34, d'un volant d'inertie 35 ayant une masse comprise entre 350 et 500 kilogrammes, en fonction des types d'exploitation, c'est à dire de la densité de la matière végétale devant être broyée.

La figure 5 montre également qu'une bride 36 fixée sur le volant d'inertie 35 par des vis 37, est solidaire d'un arbre intermédiaire 38, disposé coaxialement au-dessous de l'arbre de sortie 28 précité. Cet arbre intermédiaire est monté libre en rotation, par au moins un roulement à rouleaux coniques 39 disposé dans un boîtier 40 fixé sur la bride médiane 8 du châssis 2. L'extrémité inférieure tronconique de l'arbre 38 est liée, en rotation par une clavette 42 et en translation par un écrou à créneau 43, au moyeu 44 d'une bride de fixation 45.

Enfin, sur la bride 45 est fixé, par des boulons 46, un plateau circulaire 47, en forme de couronne, comportant au moins deux pivots 48 pour des lames de coupe 49. Les deux pivots sont fixés à proximité de la périphérie du plateau 47 et sont diamétralement opposés de part et d'autre de son axe de rotation. Chacun d'eux est constitué par un noyau cylindrique de fort diamètre, de l'ordre de 110 millimètres, et est fixé, par des vis verticales 52, sur une partie du plateau renforcée par des plaques 50.

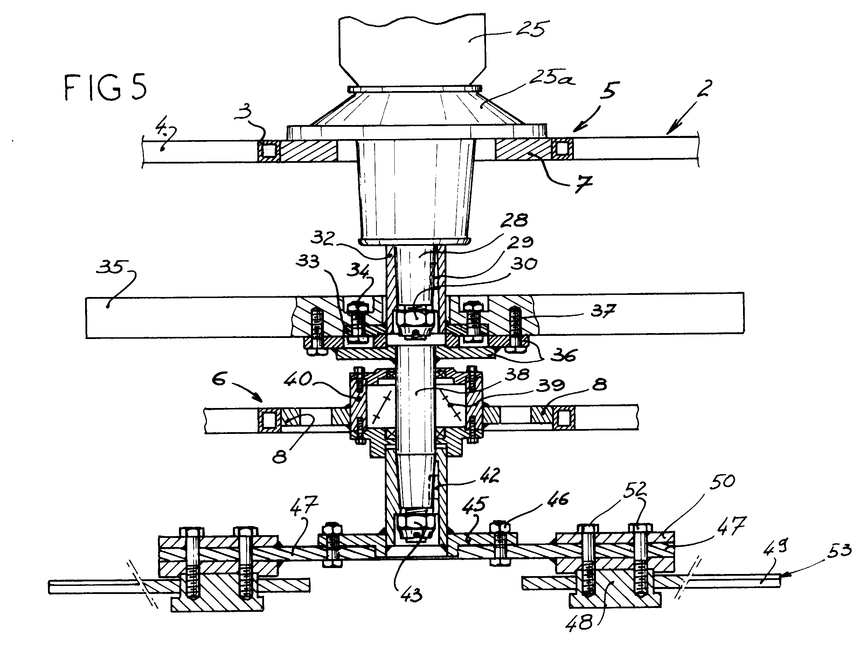

Comme le montre plus en détails la figure 4, chacune des lames 9 a une forme générale trapézoïdale et comporte, d'une part et dans sa partie de plus grande largeur, un alésage 52 de même diamètre, au jeu près, que celui des pivots 48, et d'autre part et sur ses bords longitudinaux des parties tranchantes 53. Ces lames sont libres en rotation et peuvent donc s'effacer si elles rencontrent une résistance excessive. Elles sont démontables, interchangeables et réversibles.

En fonctionnement, et comme le montre la figure 1, la machine selon l'invention, et en l'occurrence le tracteur A, se déplace dans le sens de la flèche 60 en chevauchant une rangée de pseudo-troncs 61. Durant ce mouvement, son bouclier avant B, constitué par un assemblage de tubes, renforcés ou non par un panneau métallique, incline les pseudo-troncs non sectionnés en les couchant sur le sol. Après passage sur eux du tracteur, les pseudo-troncs sont coiffés par le châssis tunnel 2 qui est alors dans la position représentée à la figure 2, c'est à dire est incliné sur l'arrière d'un angle a compris entre 5 et 15 °, selon les types d'exploitation, et de manière que la trajectoire circulaire des lames de coupe 49 sécante le sol.

Avec cette disposition, et grâce à l'énergie cinétique communiquée aux lames par le plateau 47, celles-ci attaquent d'abord les pseudo-troncs par la partie antérieure surélevée de leur plan de coupe, puis, par la partie postérieure de celui-ci, déchiquètent très aisément les déchets végétaux reposant sur le sol et la partie souterraine du bananier.

Durant cette opération, l'effort résistant, qu'elles rencontrent à l'attaque de chaque pseudo-tronc, est compensé par l'énergie cinétique accumulée dans le volant d'inertie 35, ce qui permet d'obtenir le déchiquetage recherché sans entraîner une baisse de régime importante sur le moteur thermique du tracteur.

Il faut ici noter que, si l'effort résistant est exceptionnellement important et tend à réduire considérablement la vitesse de rotation de l'ensemble rotatif, cet incident est sans effet sur l'arbre télescopique 23 et en conséquence sur le moteur thermique et la transmission du tracteur, grâce au limiteur de couple 26 qui se met alors à patiner en assurant la séparation entre le couple résistant et le couple moteur. A l'inverse, si en exploitation le moteur thermique baisse de régime, ou cale, alors que le broyeur continue son mouvement de rotation sous l'action de l'énergie cinétique accumulée dans le volant 35, le mouvement de ce volant n'est pas transmis au moteur en raison de la présence du mécanisme à cliquet 27.

Il ressort de ce qui précède qu'au fur et à mesure de l'avancement de la machine selon l'invention au-dessus d'une rangée de pseudo-troncs de bananiers, celle-ci assure le déchiquetage de tous les éléments passant sous son châssis tunnel 2 en formant derrière elle, un mulch de produits végétaux finement broyés, s'étendant en surface ou enfouis de la valeur de la profondeur d'action des lames dans le sol.

Il est évident, qu'en cas de bourrage, c'est à dire lorsque la quantité de matières végétales devant être déchiquetée est supérieure à la capacité momentanée du broyeur, l'opérateur, assis sur le tracteur, peut, en arrêtant l'avance du tracteur, soulever le châssis pour réduire l'épaisseur devant être déchiquetée. Bien entendu, cette opération nécessite de revenir en arrière pour effectuer une nouvelle passe jusqu'à obtention du déchiquetage recherché.

Dans la forme d'exécution des figures 1 à 5, cette opération s'effectue par actionnement de vérin 19 et implique, après débourrage, de repositionner angulairement le châssis tunnel.

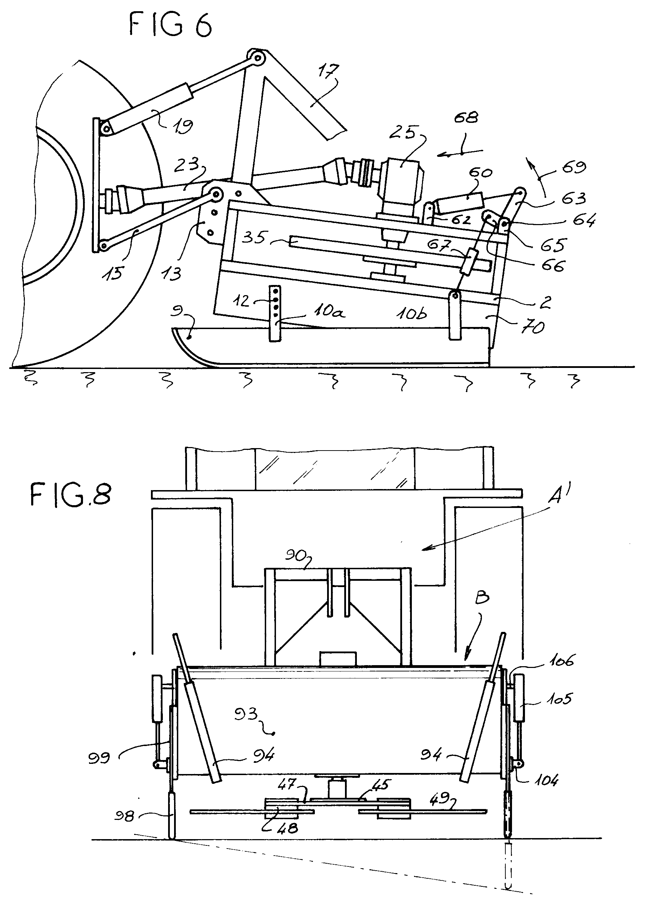

Pour remédier à cela, la variante de réalisation représentée figure 6 comprend des moyens permettant de redresser le châssis tunnel 2, pour réduire l'angle de coupe et amener les lames dans une position haute horizontale, sans avoir à actionner le vérin 19 du relevage.

Ces moyens sont composés d'un vérin hydraulique à double effet 60 qui, disposé au dessus du châssis 2 et sensiblement dans le plan médian de celui-ci, est articulé, d'un coté, sur une chape 62 de ce châssis et , de l'autre coté, à l'extrémité d'un levier 63 calé sur un arbre transversal 64. L'arbre 64 est monté libre en rotation dans des paliers 65 et porte des leviers 66, calés à chacune de ses extrémités dépassant du châssis 2. Chaque levier est relié par une bielle 67, réglable en longueur, au montant arrière 10b du châssis 2. Enfin, chacun des montants avant 10 a n'est lié au châssis 2 que par une seule broche 12 formant axe de pivotement des patins sur le châssis.

Lorsque le broyeur est dans des conditions de bourrage, c'est à dire peine à déchiqueter les matières végétales et ralenti sa vitesse de rotation, le conducteur du tracteur actionne le vérin 60 dans le sens de la flèche 68, c'est à dire dans le sens de sa rétraction. Il en résulte que, le levier 63, l'arbre 64 et les leviers 66, pivotent dans le sens de la flèche 69, et que la réaction sur les bielles 67, déjà en appui sur le sol par l'intermédiaire des montants 10b, engendre, par rotation autour des broches 12, le soulèvement de la partie arrière du châssis tunnel 2. Ce mouvement redresse sur l'horizontale l'angle d'inclinaison des lames 49 du broyeur et réduit la hauteur d'action du broyage, donc diminue la résistance.

Cette manoeuvre s'effectue sans qu'il soit besoin d'intervenir sur le vérin 19, de sorte qu'après recul du tracteur, le réglage de l'angle de coupe du broyeur, c'est à dire la remise en position normale de coupe, s'effectue par le seul vérin 60, au moyen d'une vanne, graduée ou munie de repères, pour visualiser la position optimale de travail.

Il faut noter que grâce à la structure, des moyens de coupe, et notamment à la forme du plateau et au montage des lames, ceux-ci sont peu sensibles à l'emmêlage autour d'eux des filaments végétaux ou des feuilles et conservent ainsi leur efficacité, quelle que soit la densité de la végétation.

Pour améliorer la sécurité du personnel travaillant autour de cette machine, et notamment pour éviter les projections de pierres ou de déchets végétaux hors du châssis tunnel, celui-ci est associé, sur les cotés à des tôles 70, et, sur l'arrière, à un rouleau de protection 72, visible aux figures 1 et 2. Ce rouleau est composé de deux flasques circulaires 73, formant roues et reliées l'une à l'autre, d'une part, par un arbre axial 74 et, d'autre part, par des tiges 75. L'arbre 74 est monté libre en rotation, par chacune de ses extrémités, aux extrémités arrières de deux leviers 76 articulés, par leur extrémité avant et en 77, à l'arrière du châssis tunnel 2.

Des essais réalisés avec la machine selon l'invention ont montré que, par rapport aux solutions utilisées jusqu'à ce jour, elle permettait :
- d'obtenir un hachage des déchets très poussé,
- de détruire les parties végétales enfouies dans le sol, grâce à l'angle du plan de coupe par rapport au sol,
- de faire travailler le moteur du tracteur à régime constant, sans demander de surpuissance au passage sur des amas végétaux plus denses,
- de ne pas dégrader la structure du sol par tassement ou lissage, comme c'est le cas avec les pulvérisateurs actuels,
- et surtout de remplacer les nombreux passages sur le sol, à savoir quatre passages croisés pour les pulvérisateurs et deux passages croisés pour l'opération de soussolage, par un seul passage de la machine de destruction suivi par un seul passage d'une charrue sillonneuse, c'est à dire sans entraîner aucune modification de la structure profonde du sol.

Dans une variante de réalisation, non représentée, le renvoi d'angle 25 est remplacé par un moteur hydraulique dont l'arbre de sortie est relié de la même façon que l'arbre 28 au volant 35 et dont l'alimentation est assurée par une pompe hydraulique, entraînée par le moteur thermique du châssis autotracté. Excepté ces différences relatives à l'entraînement en rotation du broyeur, tous les autres éléments du broyeur sont identiques afin que l'action de coupe des lames 49 bénéficie de l'énergie cinétique du volant 35.

Il est évident que le châssis automoteur, décrit comme étant un tracteur traditionnel polyvalent, à au moins deux roues motrices et à au moins une roue directrice, peut être remplacé par un châssis automoteur spécifique.

La forme d'exécution représentée aux figures 7 et 8 se différencie de la précédente par le sens de travail, représenté par la flèche 80 à la figure 7, par la position et la structure du bouclier B, par les moyens de réglage de son inclinaison, et par les moyens de réglage de ses patins.

Un tel châssis tunnel est applicable à un tracteur A' permettant de travailler dans un sens correspondant au déplacement vers l'arrière du tracteur. La fixation du châssis 2a sur l'arrière du tracteur se différencie de celle de la machine précédente par le remplacement du vérin 19, par le tirant traditionnel 82 de l'attelage trois points du tracteur, et par le fait que ce tirant n'est pas articulé directement sur le châssis, mais en 83 sur une plaque de fixation 84, elle-même fixée à l'extrémité supérieure d'un portique rigide 85.

Quant au moyen de réglage de l'inclinaison du broyeur, ils sont constitués par un unique vérin hydraulique 87 dont le corps est articulé en 88 sur la plaque 84 et dont la tige est articulée en 89, à l'extrémité supérieure et au milieu d'un portique 90. Les montants de ce portique sont fixés sur l'extrémité du châssis tunnel 2a, de manière rigide mais réglable. Cet agencement permet de donner au châssis 2a, et en conséquence au plan de coupe P, un angle d'inclinaison a.

Cet agencement permet, en cas de bourrage et de l'avancement de la machine de réduire l'effort résistant en soulevant l'ensemble du broyeur au moyen du dispositif de relevage du tracteur, donc sans agir sur les moyens de réglage de l'inclinaison de ce broyeur. De ce fait, lorsque l'ensemble de broyage est ramené en position de travail, l'inclinaison du plan de coupe est conservée et ne nécessite pas de réglage.

Le bouclier B est formé par une structure 92 portant une paroi transversale 93 de laquelle font saillie deux éperons 94.

La figure 8 montre bien que ces éperons sont disposés près des bords de la paroi 93 et de manière à former un "V" allant en convergeant de l'extérieur vers l'intérieur du châssis tunnel. Ce bouclier est articulé en 95 sur un axe transversal horizontal porté par des paliers 96 saillant du châssis tunnel.

Cette structure 92 est reliée, par au moins un vérin hydraulique 97, à la partie supérieure du châssis tunnel 2a. Ce vérin 97 permet de régler l'inclinaison du bouclier pour l'adapter à la hauteur de la végétation et plus précisément pour lui donner une position lui permettant d'incliner les pseudo-troncs juste avant leur attaque par les lames du broyeur, comme montré à la figure 7.

Enfin, les patins 98 sont solidaires de flasques 99 constituant écran protecteur en limitant les projections latérales. Chacun des flasques comporte un montant vertical 100 s'articulant, par une broche 102, sur un montant perforé 103 du châssis et une chape 104, sur laquelle est articulée la tige d'un vérin 105 dont le corps est articulé en 106 sur le châssis.

Il est évident que l'ensemble de broyage qui vient d'être décrit comporte le même plateau porte-lame avec volant d'inertie que dans la forme d'exécution précédente et les mêmes moyens d'entraînement en rotation.

Cette dernière forme d'exécution permet de donner une plus grande inclinaison au plan de coupe P, tout en facilitant le contrôle par l'opérateur des opérations de broyage et d'enfouissage et en améliorant la protection du personnel vacant autour de la machine.

## Revendications

1. Machine pour la destruction des déchets de bananeraie, du type comprenant un châssis automoteur (A, A') sur roues, dont au moins deux roues sont motrices et dont au moins l'une est directrice, caractérisée en ce qu'elle comporte, d'avant en arrière par rapport au sens de travail :
- un bouclier (B) d'inclinaison des pseudo-troncs non sectionnés,
- et un châssis tunnel (2, 2a) qui, ayant en section transversale la forme d'un "U" retourné, est relié au châssis automoteur (A, A') avec interposition de moyens (15, 19; 15, 87) de réglage du niveau et de l'inclinaison sur l'horizontale du plan de coupe du broyeur à inertie qu'il supporte,
- ce châssis tunnel portant, d'une part et en partie supérieure, un moyen (25) d'entraînement en rotation d'un arbre (28) sensiblement vertical à l'extrémité inférieure duquel est calé un volant d'inertie (35), et, d'autre part et en partie médiane, un palier fixe (39-40) pour un arbre intermédiaire (38), coaxial au premier et dont l'extrémité supérieure est liée en rotation au volant d'inertie (35), alors que, sur son extrémité inférieure, est calé un plateau circulaire (47) porteur d'au moins deux lames de coupe (49) montées libres en rotation sur des pivots (48).

2. Machine selon la revendication 1, caractérisée en ce que le bouclier (B) est disposé à l'avant du châssis automoteur (A), et ce châssis automoteur est constitué par un tracteur agricole, dont les deux bielles d'attelage (15), inférieures et latérales, sont reliées chacune à l'un des deux goussets (13) du châssis tunnel et dont le point d'attelage, central et supérieur, est relié à une broche d'attelage (18) du châssis tunnel (2) par un vérin hydraulique à double effet (19).

3. Machine selon l'une quelconque des revendications 1 et 2, caractérisée en ce que le châssis tunnel (2) est associé à un rouleau traîné (72) de protection contre les projections, rouleau dont les extrémités de l'arbre horizontal (74) sont montées, libres en rotation, aux extrémités arrières de deux leviers (75) articulés, par leur extrémité avant, et en (77), à l'arrière du châssis tunnel (2).

4. Machine selon l'une quelconque des revendications 1 à 3, caractérisée en ce que le châssis tunnel (2) repose sur le sol par l'intermédiaire de patins longitudinaux (9) munis, chacun, d'au moins deux montants (10) positionnés sur l'un des longerons du châssis par des broches transversales amovibles (12), traversant l'une des perforations dont ils sont munis.

5. Machine selon l'une quelconque des revendications 1 à 4, caractérisée en ce que le châssis tunnel repose sur le sol par l'intermédiaire de patins longitudinaux (9) munis chacun, d'un montant antérieur perforé (10a), articulé autour d'une broche transversale amovible (12) se fixant dans un palier du châssis tunnel et traversant l'une des perforations de ce montant, et d'un montant postérieur (10b), relié à des moyens aptes à régler sa position par rapport au châssis tunnel (2).

6. Machine selon la revendication 5, caractérisée en ce que les moyens réglant la position des montants (10b) par rapport au sol et déterminant l'angle de coupe du broyeur comprennent, d'une part, au-dessus du châssis tunnel (2), un vérin hydraulique à double effet (60), articulé sur une chape fixe (62) du châssis et à l'extrémité d'un levier (63) calé sur un arbre transversal (64), d'autre part, deux leviers (66) calés aux extrémités de l'arbre transversal (64) et qui débordent du châssis-tunnel (2), et, de plus, deux bielles (67) reliant chacune l'un des leviers (66) au montant postérieur (10b) du patin d'appui correspondant.

7. Machine selon la revendication 1, caractérisée en ce que le châssis tunnel (2a) est attelé, à l'arrière d'un tracteur agricole A' tandis que le bouclier (B) est à inclinaison réglable et est articulé sur le bord du châssis tunnel (2a) qui est antérieur à lui, par rapport au sens de travail correspondant au déplacement du tracteur vers l'arrière.

8. Machine selon la revendication 7, caractérisée en ce que le tirant d'attelage (82), central et supérieur, de l'attelage trois points du tracteur est articulé sur une plaque de fixation (83) qui est fixée sur un portique (85) et comporte au moins un alésage pour l'articulation du corps d'un vérin hydraulique (87) de réglage de l'inclinaison du châssis tunnel, vérin dont la tige est articulée sur un autre portique (90), saillant de l'autre extrémité du châssis tunnel.

9. Machine selon l'une quelconque des revendications 7 et 8, caractérisée en ce que le bouclier (B) comporte une paroi transversale (93) de laquelle font saillies deux éperons latéraux de guidage (94), disposées sur elle en formant un "V" convergeant en direction du broyeur.

10. Machine selon l'une quelconque des revendications 7 à 9, caractérisée en ce que le bouclier (B) est articulé sur le châssis tunnel (2a), auquel il est relié par au moins un vérin hydraulique (97) de réglage de son inclinaison.

11. Machine selon l'une quelconque des revendications 7 à 10, caractérisée en ce que le châssis tunnel (2a) repose sur le sol par l'intermédiaire de patins longitudinaux (98) munis chacun de flasques de protection (99), d'un montant (100) articulé autour d'une broche transversale amovible (102), se fixant dans un montant (103) du châssis (2a), et d'une chape (104) pour l'articulation de la tige d'un vérin hydraulique (105) dont le corps est articulé sur le châssis tunnel (2a).

12. Machine selon l'une quelconque des revendications 2 et 7, caractérisée en ce que la prise de force (22) du tracteur (A ou A') est reliée à l'arbre d'entrée (24) d'un renvoi d'angle (25), multiplicateur de vitesse, par un arbre de transmission télescopique (23) à double joints de cardan avec interposition de moyens (26) limiteurs de couple et d'un mécanisme à cliquets (27) ne tolérant la transmission du mouvement que dans le sens prise de force - renvoi d'angle.

13. Machine selon l'une quelconque des revendications 2 et 7, caractérisée en ce que les moyens d'entraînement du volant d'inertie (35) sont constitués par un moteur hydraulique alimenté par une pompe hydraulique portée par le châssis automoteur (A) et entraînée par le moteur thermique de ce châssis.

## Claims

1. Machine for destroying banana plantation debris, of the type having a wheel-mounted automotive chassis (A, A') of which at least two wheels are drive wheels and at least one is a steering wheel, characterized in that it comprises, from the front to the back in the direction of operation:
- a shield (B) for pushing over uncut false trunks,
- and a tunnel chassis (2, 2a) which, having a cross section in the form of an upside down U, is connected to the automotive chassis (A, A') with interposition of means (15, 19; 15, 87) for adjusting its level and tilting the cutting plane of the inertial grinder that it supports with respect to the horizontal,
- this tunnel chassis having, at the upper part, a means (25) for rotationally driving a shaft (28) that is substantially vertical, at the lower end of which is wedged an inertial flywheel (35) and at its median part a fixed bearing (39-40) for an intermediate shaft (38), coaxial with the first and whose upper end is connected rotationally to inertial flywheel (35) while, on its lower end is wedged a circular plate (47) bearing at least two cutting blades (49) mounted freely rotationally on pivots (48).

2. Machine according to Claim 1 characterized in that shield (B) is disposed in front of automotive chassis (A), this automotive chassis being a farm tractor, whose two lower lateral connecting rods (15) are each connected to one of two gussets (13) of the tunnel chassis and whose upper central hitching point is connected to a hitching pin (18) of tunnel chassis (2) by a double-acting hydraulic jack (19).

3. Machine according to either of Claims 1 and 2 characterized in that tunnel chassis (2) is associated with a towed roller (72) for protection against ejected matter, the ends of the horizontal shaft (74) of which roller are attached, freely rotationally, to the rear ends of two levers (75) articulated by their front ends, and by (77) behind tunnel chassis (2).

4. Machine according to anyone of Claims 1 to 3, characterized in that tunnel chassis (2) rests on the ground by means of lengthwise skids (9) each provided with at least two risers (10) positioned on one of the spars of the chassis by removable transverse pins (12) passing through one of the openings with which they are provided.

5. Machine according to anyone of Claims 1 to 4, characterized in that the tunnel chassis rests on the ground by means of lengthwise skids (9) each provided with a perforated anterior riser (10a) articulated around a removable transverse pin (12) attached to a bearing of the tunnel chassis and passing through one of the openings in this riser and with a posterior riser (10b) connected to means able to adjust its position relative to tunnel chassis (2).

6. Machine according to Claim 5, characterized in that the means regulating the positions of risers (lob) relative to the ground and determining the cutting angle of the grinder have on the one hand, above tunnel chassis (2), a double-acting hydraulic jack (60) articulated on a clevis (62) on the chassis and at the end of a lever (63) joined to a transverse shaft (64) and on the other hand two levers (66) joined to the ends of transverse shaft (64) which project beyond tunnel chassis (2) and, moreover, two connecting rods (67) each connecting one of levers (66) to the rear riser (10b) of the corresponding support skid.

7. Machine according to claim 1, characterized in that tunnel chassis (2a) is hitched behind a farm tractor A', while shield (B) is at an adjustable inclination and is articulated to the edge of tunnel chassis (2a) which is in front of it relative to the direction of operation corresponding to movement of the tractor in reverse.

8. Machine according to claim 7 characterized in that the central, upper hitching tie rod (82) of the three-point hitch of the tractor is articulated to an attachment plate (83) which is attached to a frame (85) and has at least one bore for articulation of the body of a hydraulic jack (87) for adjustment of the inclination of the tunnel chassis, the rod of said jack being articulated to another frame (90) projecting from the other end of the tunnel chassis.

9. Machine according to either of claims 7 or 8, characterized in that shield (B) has a transverse wall (93) from which project two lateral guide spurs (94) disposed thereon forming a "V" that converges in the direction of the grinder.

10. Machine according to anyone of claims 7 to 9, characterized in that shield (B) is articulated to tunnel chassis (2a) to which it is connected by at least one hydraulic jack (97) for adjusting its inclination.

11. Machine according to anyone of claims 7 to 10, characterized in that tunnel chassis (2a) rests on the ground by means of two lengthwise skids (98) each provided with protective flanges (99), a riser (100) articulated around a removable transverse pin (102), which is attached to a riser (103) of chassis (2a), and a clevis (104) for articulation of the rod of hydraulic jack (105) whose body is articulated to tunnel chassis (2a).

12. Machine according to claim 2 or 7, characterized in that the drive pin (22) of tractor (A or A') is connected to the input shaft (24) of a angular transfer, speed multiplier element (25), via a telescopic trasnmission shaft (23) having double cardan joints, with interposition of torque limiting means (26) and of a ratchet mechanism (27) enabling the tra,smission of movement only in the direction from the drive pin to the angluar trasnfer element.

13. Machine according to claim 2 or 7, characterized in that the means for driving the inertial flywheel (35) are comprised of a hydraulic motor supplied from a hydraulic pump mounted on automotive chassis (A) and driven by the thermal engine of this chassis.

## Patentansprüche

1. Maschine zum Zerstören von Bananenplantagen-Abfällen mit einem selbstfahrenden Fahrgestell (A; A') auf Rädern, von denen wenigstens zwei angetrieben sind und von denen wenigstens eines richtungsgebend ist, **dadurch gekennzeichnet, daß** sie in Arbeitsrichtung von vorne nach hinten umfaßt:
- einen Schild (B) zum Neigen der nicht geschnittenen Pseudo-Stämme,
- und einen Tunnelrahmen (2; 2a), der im Querschnitt die Form eines umgekehrten "U" aufweist und mit dem selbstfahrenden Fahrgestell (A; A') unter Zwischenanordnung von Mitteln (15, 19; 15, 87) zum Einstellen der Höhe und der Neigung zur Horizontalen der Schnittebene des Trägheitszerkleinerers, den er trägt, verbunden ist,
- wobei dieser Tunnelrahmen einerseits und im oberen Teil ein Mittel (25) zum Drehantrieb einer im wesentlichen vertikalen Welle (28) trägt, an deren unterem Ende ein Schwungrad (35) befestigt ist, und wobei dieser Tunnelrahmen andererseitS und im mittleren Teil ein festes Lager (39-40) für eine zur ersten Welle koaxiale Zwischenwelle (38) trägt, deren oberes Ende mit dem Schwungrad (35) drehfest verbunden ist, während an ihrem unteren Ende eine Kreisscheibe (47) befestigt ist, welche wenigstens zwei auf Schwenklagern (48) frei verdrehbar angebrachte Schnittmesser (49) trägt.

2. Maschine nach Anspruch 1,
**dadurch gekennzeichnet, daß** der Schild (B) an der Vorderseite des selbstfahrenden Fahrgestells (A) angeordnet ist, und dieses selbstfahrende Fahrgestell von einem landwirtschaftlichen Traktor gebildet ist, dessen beide untere und seitliche Kupplungsstangen (15) jeweils mit einem der beiden Eckstücke (13) des Tunnelrahmens verbunden sind und dessen mittlerer und oberer Kupplungspunkt über einen doppeltwirkenden Hydraulikzylinder (19) mit einem Kupplungsdorn (18) des Tunnelrahmens (2) verbunden ist.

3. Maschine nach einem der Ansprüche 1 und 2,
**dadurch gekennzeichnet, daß** der Tunnelrahmen (2) einer nachgezogenen Rolle (72) zum Schutz vor Vorsprüngen zugeordnet ist, wobei die Enden der horizontalen Welle (74) der Rolle frei verdrehbar an den hinteren Enden von zwei Hebeln (75) angebracht sind, die mit ihrem vorderen Ende und bei (77) an der hinteren Seite des Tunnelrahmens (2) angelenkt sind.

4. Maschine nach einem der Ansprüche 1 bis 3,
**dadurch gekennzeichnet, daß** der Tunnelrahmen (2) mittels Längskufen (9) auf dem Erdboden ruht, welche jeweils mit mindestens zwei Hochstreben (10) ausgestattet sind, die an einem der Längsträger des Rahmens mittels lösbarer Querdorne (12) angeordnet sind, wobei die Querdorne (12) eine der Durchbrechungen durchsetzen, mit welchen die Hochstreben (10) versehen sind.

5. Maschine nach einem der Ansprüche 1 bis 4,
**dadurch gekennzeichnet, daß** der Tunnelrahmen mittels Längskufen (9) auf dem Erdboden ruht, welche jeweils mit einer vorderen durchbrochenen Hochstrebe (10a) ausgestattet sind, die um einen lösbaren Querdorn (12) angelenkt ist, wobei dieser Querdorn (12) in einem Lager des Tunnelrahmens befestigt ist und eine der Durchbrechungen dieser Hochstrebe durchsetzt, sowie mit einer hinteren Hochstrebe (10b) ausgestattet ist, die mit Mitteln verbunden ist, die deren Stellung bezüglich des Tunnelrahmens (2) einstellen können.

6. Maschine nach Anspruch 5,
**dadurch gekennzeichnet, daß** die Mittel, welche die Stellung der Hochstreben (10b) bezüglich des Erdbodens einstellen und den Schnittwinkel des Zerkleinerers bestimmen, einerseits oberhalb des Tunnelrahmens (2) einen doppeltwirkenden Hydraulikzylinder (60) umfassen, welcher an einem festen Bügel (62) des Rahmens und am Ende eines an einer Querwelle (64) befestigten Hebels (63) angelenkt ist, und andererseits zwei Hebel (66) umfassen, welche an den Enden der Querwelle (64) befestigt sind und über den Tunnelrahmen (2) hinausragen, und darüber hinaus zwei Schwingen (67) umfassen, welche jeweils einen der Hebel (66) mit der hinteren Hochstrebe (10b) der entsprechenden Stützkufe verbinden.

7. Maschine nach Anspruch 1,
**dadurch gekennzeichnet, daß** der Tunnelrahmen (2a) an der hinteren Seite eines landwirtschaftlichen Traktors (A') angekuppelt ist, während der Schild (B) von einstellbarer Neigung ist und an dem Rand des Tunnelrahmens (2a) angelenkt ist, der bezüglich der der Rückwärtsbewegung des Traktors entsprechenden Arbeitsrichtung hinter ihm angeordnet ist.

8. Maschine nach Anspruch 7,
**dadurch gekennzeichnet, daß** die mittlere und obere Kupplungsstange (82) der Dreipunkt-Kupplung des Traktors an einer Befestigungsplatte (83) angelenkt ist, die an einem Portalrahmen (85) befestigt ist und wenigstens eine Ausnehmung zur Anlenkung des Körpers eines Hydraulikzylinders (87) zur Einstellung der Neigung des Tunnelrahmens umfaßt, wobei der Schaft des Zylinders an einem weiteren Portalrahmen (90) angelenkt ist, der vom anderen Ende des Tunnelrahmens absteht.

9. Maschine nach einem der Ansprüche 7 und 8,
**dadurch gekennzeichnet, daß** der Schild (B) eine Querwand (93) umfaßt, von der zwei seitliche Führungssporne (94) abstehen, welche auf dieser in Form eines in Richtung des Zerkleinerers zusammenlaufenden "V" angeordnet sind.

10. Maschine nach einem der Ansprüche 7 bis 9,
**dadurch gekennzeichnet, daß** der Schild (B) an dem Tunnelrahmen (2a) angelenkt ist, mit welchem er über wenigstens einen Hydraulikzylinder (97) zur Einstellung seiner Neigung verbunden ist.

11. Maschine nach einem der Ansprüche 7 bis 10,
**dadurch gekennzeichnet, daß** der Tunnelrahmen (2a) mittels Längskufen (98) auf dem Erdboden ruht, welche jeweils mit Schutzflanschen (99) ausgestattet sind, mit einer Hochstrebe (100) ausgestattet sind, welche um einen in einer Hochstrebe (103) des Rahmens (2a) befestigten lösbaren Querdorn (102) angelenkt ist, und mit einem Bügel (104) ausgestattet sind zur Anlenkung des Schafts eines Hydraulikzylinders (105), dessen Körper an dem Tunnelrahmen (2a) angelenkt ist.

12. Maschine nach einem der Ansprüche 2 und 7,
**dadurch gekennzeichnet, daß** die Zapfwelle (22) des Traktors (A oder A') über eine teleskopische Übertragungswelle (23) mit doppeltem Kardangelenk mit der Eingangswelle (24) eines übersetzenden Umlenkgetriebes (25) verbunden ist, und zwar unter Zwischenanordnung von Momentenbegrenzungsmitteln (26) und eines Ratschenmechanismus (27), der die Bewegungsübertragung nur in der Richtung Zapfwelle-Umlenkgetriebe zuläßt.

13. Maschine nach einem der Ansprüche 2 und 7,
**dadurch gekennzeichnet, daß** die Antriebsmittel des Schwungsrads (35) von einem Hydraulikmotor gebildet sind, der von einer Hydraulikpumpe gespeist ist, die von dem selbstfahrenden Fahrgestell (A) getragen und der Wärmekraftmaschine dieses Fahrgestells angetrieben ist.
